Europäisches Patentamt

European Patent Office

Office européen des brevets

(19)

(11) Numéro de publication: **0 323 370**
**B1**

(12) **FASCICULE DE BREVET EUROPEEN**

(45) Date de publication du fascicule du brevet:
07.11.90

(51) Int. Cl.⁵: **B65D 51/20**

(21) Numéro de dépôt: 88420429.8

(22) Date de dépôt: 21.12.88

(54) **Emballage comprenant un tube, une capsule à vis, et un opercule à souder sur le goulot du tube, et procédé de fermeture dudit tube.**

(30) Priorité: 23.12.87 FR 8718527

(43) Date de publication de la demande:
05.07.89 Bulletin 89/27

(45) Mention de la délivrance du brevet:
07.11.90 Bulletin 90/45

(84) Etats contractants désignés:
AT BE CH DE ES FR GB GR IT LI LU NL SE

(56) Documents cités:
EP-A- 0 138 290
EP-A- 0 148 527
EP-A- 0 179 498
FR-A- 2 148 645
US-A- 4 697 719

(73) Titulaire: CEBAL, 98, boulevard Victor Hugo,
F-92115 Clichy(FR)

(72) Inventeur: Delespaul, Frédéric, 20, rue Chantereine,
F-51800 Sainte Menehould(FR)
Inventeur: Schneider, Bernard, 4, rue des Six Frères,
F-51800 Sainte Menehould(FR)

(74) Mandataire: Vanlaer, Marcel et al, PECHINEY 28, rue de
Bonnel, F-69433 Lyon Cédex 3(FR)

ACTORUM AG

## Description

La présente invention concerne un emballage constitué d'un tube dont le goulot au moins est en matière plastique, d'une capsule également en matière plastique, et d'un opercule soudé de façon étanche ou à souder sur l'extrémité du goulot. Elle concerne aussi le procédé de fermeture de ce tube au moyen de cette capsule et de cet opercule.

Le document EP-A 0 148 527 décrit un emballage comprenant un tube et une capsule vissable sur le goulot de ce tube, le tube et la capsule étant tous deux en matière plastique, avec un opercule intermédiaire, ayant 3 couches respectivement de carton, de feuille d'aluminium et de matière thermosoudable, cet opercule débordant du goulot étant soudable par induction sur ce goulot sur lequel il est appuyé par un épaulement périphérique de la capsule en vue du scellage, le pourtour débordant de l'opercule étant non soudé et servant à l'arrachement de cet opercule.

Le document EP-A 0 179 494 décrit un emballage analogue, dont l'opercule est scellable sur le goulot ou rebord d'un récipient, un épaulement circulaire d'appui de la capsule venant serrer le pourtour de l'opercule sur la zone périphérique externe du goulot et une couronne interne venant appuyer sur l'opercule au droit du bord d'extrémité dudit goulot.

Par ailleurs, le document FR-A 2 148 645 (= GB 1 376 775 = DE 2 237 322) décrit un tel emballage dont l'opercule déborde de l'extrémité du goulot, ce débordement de tout le pourtour de l'opercule constituant son moyen d'arrachement. L'opercule est découpé dans un stratifié comprenant une couche inférieure thermoplastique soudable sur l'extrémité du goulot, puis une couche métallique et au-dessus une couche de renfort. Le pourtour de l'orifice est incliné, de sorte que le pourtour débordant de l'opercule n'est pas appuyé sur le goulot lorsqu'on fixe sur ce goulot la capsule ou le couvercle par encliquetage. Le soudage de l'opercule est alors fait par induction, le pourtour débordant de l'opercule restant libre.

Dans ces trois solutions, l'application de l'opercule sur l'extrémité du goulot n'est pas compatible avec une bavure de manque de tronçonnage de ce goulot, de telles bavures entraînant des manques de soudage et/ou des déchirures ou crevaisons des opercules. Par ailleurs, le débordement périphérique de l'opercule dans le premier et le troisième document est un moyen d'arrachement de commodité discutable.

La demanderesse a cherché à mettre au point un emballage évitant les inconvénients précédents, l'opercule étant facile à arracher après soudage, et étant soudé étanche avec sécurité malgré l'éventuelle bavure de manque de tronçonnage de l'extrémité du goulot.

## EXPOSE DE L'INVENTION

L'invention a pour premier objet un emballage qui, comme il est connu par le document EP-A 0 148 527, comprend un tube à goulot fileté en matière plastique, une capsule à vis également en matière plastique et un opercule intermédiaire de contour circulaire de diamètre voisin ou égal au diamètre extérieur de l'extrémité du goulot et comportant plusieurs couches dont une couche barrière et pouvant être soudé sur l'extrémité du goulot après vissage de la capsule sur ledit goulot. Le fond de la capsule comporte un épaulement périphérique appuyant alors ledit opercule sur ladite extrémité du goulot et ledit opercule comporte au moins une languette débordant alors de cette extrémité pour l'arrachement de cet opercule soudé, l'extérieur dudit goulot et l'intérieur de ladite capsule laissant entre eux un espace permettant de loger le ou lesdites languettes débordantes en position rabattue.

Selon l'invention, simultanément:
– cet opercule a deux couches externes à base de matière plastique, et il est déformable avec un retour élastique faible ou nul, la déformation angulaire résiduelle dudit opercule plié après relâchement de la contrainte de pliage étant d'au moins la moitié de sa déformation en fin de pliage, de façon à ce qu'il chevauche l'éventuelle bavure d'extrémité du goulot sans risque de crevaison;
– l'épaulement périphérique d'appui a un diamètre intérieur choisi entre les diamètres intérieur et extérieur du goulot, et la surface centrale du fond de la capsule est en retrait de façon à ne pas appuyer l'opercule sur la bavure de coupe de l'extrémité du goulot, la partie centrale dudit opercule venant alors en raison de sa nature chevaucher ladite bavure sans risque de déchirure.

L'explication de ces moyens tous nécessaires pour obtenir en fabrication de série un scellage étanche du goulot de chaque tube par son opercule, avec ouverture facile par l'utilisateur, est la suivante:

une première difficulté est la présence fréquente d'un manque de planéité de la surface d'extrémité du goulot, par suite d'une coupe légèrement oblique de cette extrémité, à cause de l'effort exercé par l'outil de coupe sur le tube, et par suite des tolérances pratiques de coupe de la carotte d'injection, ces conditions entraînant souvent la présence d'une bavure asymétrique prolongeant l'orifice du goulot et ayant typiquement une hauteur maximale de l'ordre de 0,6 mm et une épaisseur maximale de 0,8 mm au rayon. En l'absence de précautions particulières, cette bavure entraîne un manque de soudage de l'opercule et parfois sa crevaison, cet opercule étant serré entre de fond de la capsule et l'extrémité du goulot. Une deuxième difficulté est d'obtenir à la fois un scellage étanche et un arrachage facile de l'opercule, la solidité suffisante du moyen d'arrachement une fois la capsule enlevée étant préservée.

La première difficulté est résolue d'abord par la géométrie du moyen d'appui du fond de la capsule en position serrée, ce moyen d'appui étant un épaulement périphérique qui reste extérieur aux bavures dont les tolérances sont connues par la fabrication, la surface de dessous ou surface d'appui de cet épaulement étant plane et perpendiculaire à l'axe de l'emballage, et la surface centrale du fond de la capsule étant suffisamment en retrait pour ne pas appuyer l'opercule sur la bavure. Elle est résolue aussi par le choix de l'opercule qui, en raison de sa composition et de son épaisseur est "déformable et de retour élastique faible ou nul".

Cette expression veut dire que lorsque l'opercule est plié à un certain angle avec un rayon de pliage de 1 mm, sa déformation angulaire résiduelle après relâchement de la contrainte de pliage est typiquement d'au moins la moitié de sa déformation en fin de pliage.

Ce type d'opercule ne présente presque aucun risque de crevaison par l'éventuelle bavure d'extrémité du goulot, à cause de sa nature et de son épaisseur, et parce que cette bavure vient, lors du vissage à fond de la capsule sur le goulot, soulever la partie centrale de l'opercule sans qu'il y ait à cet endroit d'appui du fond de la capsule. Quant à la deuxième difficulté, la zone annulaire de serrage du pourtour de l'opercule est pratiquement définie et facilement réglable: cette zone s'étend du diamètre intérieur d'appui de l'épaulement périphérique du fond de la capsule jusqu'au diamètre extérieur de l'extrémité du goulot lorsque le diamètre du contour circulaire de l'opercule lui est égal ou légèrement supérieur -typiquement de au plus 0,5 mm -, ou jusqu'au diamètre du contour circulaire de l'opercule et à la naissance de la ou des languette(s) débordante(s) lorsque ce diamètre de l'opercule est légèrement inférieur - typiquement de moins de 0,3 mm - audit diamètre de l'extrémité du goulot.

La zone annulaire de l'opercule soudée par induction ou par ultrasons sur l'extrémité du goulot correspond à cette zone serrée et son importance est réglée de façon reproductible par les conditions de soudage, notamment la puissance et le temps. La largeur de cette zone peut être modifiée dans des limites assez charge pour ajuster soit la garantie d'étanchéité soit l'effort d'arrachement de l'opercule. Le vissage à fond de la capsule est de beaucoup préférable à un clipsage, il donne pour le soudage un serrage suffisant et aisément reproductible.

L'espace que laisse entre eux l'extrémité du goulot et la capsule en position vissée pour loger la ou les languette(s) débordante(s) rabattue(s) le long du goulot en préservant leur solidité peut se présenter sous diverses formes, par exemple un embrèvement longitudinal de l'extrémité du goulot dans le cas d'une languette unique, ou des surfaces périphériques lisses du haut du goulot et de l'intérieur de la capsule en-dessous de son épaulement périphérique dans le cas de plusieurs languettes débordantes, les filetages commençant au-dessous de ces surfaces lisses. L'expérience montre que dans cette position la ou les languettes ne sont pas du tout soudées ou collées au goulot par l'opération de soudage. Des filetages laissant entre eux l'écartement nécessaire pour loger les languettes peuvent être conservés lorsque, par exemple à cause de leur profil ou de leur nature, ils n'abîment pas les languettes en vue de l'arrachage de l'opercule.

De préférence, l'opercule a au moins trois languettes débordantes de mêmes géométries et régulièrement espacées, et ces languettes ont alors le rôle et les effets suivants:

lors de l'enfoncement de l'opercule dans la capsule, les languettes débordantes de cet opercule se replient en glissant le long de la paroi latérale filetée de la capsule et la portion centrale circulaire est alors déformée, sa surface regardant le fond de la capsule devenant et restant légèrement bombée. On constate en second lieu que, grâce aux languettes, il se produit dans l'enfoncement un maintien du centrage de l'opercule ou une rectification de ce centrage lorsque celui-ci est imparfait, par exemple à 0,5 à 1 mm près, au début de l'enfoncement. On constate enfin que le contact des languettes avec l'intérieur de la capsule maintient l'opercule dans sa position au fond ou près du fond de la capsule pendant les manipulations.

De plus le bombé de l'opercule enfoncé dans la capsule lui fait chevaucher l'éventuelle bavure d'extrémité du goulot de sorte que, même s'il y a un léger contact avec cette bavure, tout risque de crevaison ou de déchirure de l'opercule par cette bavure au serrage de la capsule est définitivement écarté. L'opercule est décollé de l'extrémité du tube sauf dans sa portion annulaire serrée par l'épaulement périphérique de la capsule, de sorte que la zone de soudage de cet opercule est encore mieux définie.

Dans la pratique, un nombre de 3 ou 5 languettes régulièrement espacées, correspondant typiquement à des opercules de diamètre de contour circulaire compris entre 8 et 16 mm, est préféré. De façon plus générale, un nombre allant de 3 à 7 languettes est recommandé pour obtenir tous les effets de l'invention.

Dans le cas fréquent où l'emballage de l'invention comporte une capsule en PP (polypropylène) et un tube portant un goulot en PE, l'opercule de l'invention, déformable et de retour élastique faible ou nul, comporte de préférence les couches suivantes, lorsqu'il doit être soudé soit par induction, soit par ultra-sons sur le goulot après serrage par vissage à fond de la capsule:

- une couche supérieure à base de polyester ou de polyéthylène, éventuellement mélangée d'adhésif;
- une couche centrale barrière en aluminium d'épaisseur 10 à 60 µm;
- une couche inférieure en matière du groupe constitué par: copolymère ou mélange à base de EAA; EVA; copolymère propylèneéthylène; cette matière étant éventuellement mélangée d'adhésif.

Cette couche inférieure est elle-même la couche de scellage de l'opercule ou bien est suivie d'une couche inférieure supplémentaire servant au scellage et à base de polyoléfine, par exemple à base de PE, de PP ou de polybutylène. L'épaisseur de l'opercule est comprise entre 0,12 et 0,40 mm et le plus souvent entre 0,16 et 0,33 mm. Des couches intermédiaires adhésives peuvent être intercalées, la couche centrale en aluminium joue le rôle de barrière pour les arômes ou parfums et est étanche pour l'oxygène. Une couche métallique d'une autre nature peut être envisagée.Il faut remarquer qu'une couche inférieure en polyester ne convient pas, contrairement à ce qui est indiqué dans le document FR-A-2148645.

Dans le même cas de la capsule en PP et du goulot en PE, l'opercule de l'invention peut ne pas comporter de couche centrale en Al et comporte alors

de préférence, lorsqu'il doit être soudé par ultrasons, au moins les couches suivantes:
- une couche supérieure barrière en polyester additionné de 10 à 30% en masse de charges minérales, éventuellement mélangé d'adhésif; - une couche centrale barrière complémentaire en matière du groupe constitué par: copolymère à base d'alcool polyvinylique (EVOH), polyamide amorphe (PA), polyamide à noyau aromatique, chlorure de polyvinylidène (PVDC).
- une couche inférieure de scellage à base de polyoléfine, typiquement en PE ou en mélange PE/adhésif; et la capsule comporte une surface extérieure perpendiculaire à son axe permettant l'application d'une sonde à ultra-sons ou sonotrode, à extrémité de préférence annulaire, au droit de la surface annulaire de serrage de l'opercule. Cet opercule soudable par ultrasons a une épaisseur habituellement comprise entre 0,10 et 0,30 mm. Il peut comprendre des couches intermédiaires adhésives. Les charges minérales comprises dans la couche supérieure ont pour but d'améliorer l'aptitude de l'opercule aux déformations permanentes et elles se présentent sous la forme de poudres fines, de granulométries inférieures à 50 μm, dont la présence n'affecte notablement ni l'aptitude de l'opercule à la déformation, ni la transmission des ultrasons pour le soudage de sa face inférieure sur le goulot.

L'invention a pour deuxième objet le procédé de fermeture d'un tube à goulot en matière plastique par une capsule avec un opercule intermédiaire découpé dans un stratifié comprenant au moins 2 couches externes à base de matière plastique et une couche barrière, procédé utilisable pour la fermeture de l'emballage selon l'invention. Comme connu par le document FR-A 2 148 465, ledit opercule de contour circulaire comporte au moins une portion débordante permettant son arrachement après scellage, la ou lesdites portions débordantes logeant entre l'extérieur du goulot et l'intérieur de la capsule fixée sur le goulot, l'opercule étant scellé sur l'extrémité du goulot. Selon l'invention, on procède aux étapes suivantes:

a) on choisit un stratifié déformable et à retour élastique faible ou nul, la déformation angulaire résiduelle dudit opercule plié après relâchement de la contrainte de pliage étant d'au moins la moitié de sa déformation en fin de pliage, d'épaisseur comprise entre 0,10 et 0,40 mm;

b) le diamètre du contour circulaire dudit opercule est choisi entre le diamètre extérieur de l'extrémité du goulot et ce diamètre augmenté de 0,5 mm, et sa ou ses portions débordantes consistent en une languette radiale ou plusieurs languettes radiales régulièrement espacées;

c) on prépare un tube ayant un goulot et une capsule filetés, cette capsule étant en matière plastique et son fond comportant un épaulement périphérique d'appui sur l'extrémité du goulot, cet épaulement ayant un diamètre intérieur compris entre les diamètres intérieur et extérieur du goulot et un fond central en retrait de façon à ne pas porter sur les bavures de défaut de coupe de l'extrémité du goulot et donc à ne pas appuyer ledit opercule sur une telle bavure, le haut de la surface latérale du goulot et l'intérieur de la capsule en-dessous de son dit épaulement laissant entre eux un espace permettant de loger le ou les languettes débordantes dudit opercule;

d) on dispose l'opercule au fond ou près du fond de la capsule, sa portion circulaire y étant centrée et sa ou ses languettes débordantes étant repliées vers la surface latérale intérieure de ladite capsule;

e) on transporte la capsule ainsi munie de l'opercule jusqu'au goulot du tube et on la visse à fond sur ce goulot; la nature dudit opercule et le fond en retrait de ladite capsule permettant alors à cet opercule de chevaucher une bavure de coupe du goulot sans risque de crevaison;

f) on soude ensuite l'opercule sur l'extrémité du goulot soit par induction, soit par ultra-sons, suivant la nature de l'opercule.

- dans l'étape (b), on découpe un opercule comportant 3 à 7 languettes débordantes radiales régulièrement espacées, de dimensions unitaires longueur 2 à 6 mm x largeur 2 à 5 mm;
- dans l'étape (c), l'extrémité du goulot et l'intérieur de la capsule en-dessous de son épaulement périphérique d'appui laissent entre eux un espace périphérique permettant de loger les languettes débordantes de l'opercule quelle que soit l'orientation de cet opercule;

(d₁) on dépose l'opercule à plat sur l'extrémité ouverte de la capsule retournée en le centrant par rapport à ladite extrémité, typiquement à 0,5 mm près;

d₂) on pousse l'opercule par sa portion circulaire au fond ou près du fond de la capsule, les languettes débordantes se repliant et servant alors de moyens de centrage et d'accrochage de l'opercule dans la capsule.

Et, qu'il s'agisse du cas général ou du procédé préférentiel, on adopte dans le cas où l'emballage comporte une capsule à vis en PP et un tube à goulot fileté en PE un opercule multicouche ayant les couches préférentielles décrites précédemment respectivement pour le cas du soudage soit par induction soit par ultra-sons, et pour le cas du seul soudage par ultra-sons. Dans ce dernier cas, la capsule doit comporter une surface extérieure permettant l'application d'une sonde à ultrasons ou sonotrode au droit de la zone serrée de l'opercule, et il est commode que cette surface soit le fond d'un creux central de la capsule permettant l'encastrement guidé de la sonde ou sonotrode. On peut avoir la même géométrie de capsule pour le soudage de l'opercule soit par induction soit par ultra-sons. Le rôle des charges minérales de la couche supérieure des opercules sans couche d'Al destinés au soudage par ultrasons a déjà été décrit, ces charges sont des poudres fines de granulométries inférieures à 50 μm et de préférence inférieures à 30 μm en matières typiquement choisies parmi: le carbonate de calcium, la silice, le talc et le verre.

## AVANTAGES DE L'INVENTION

L'opercule de l'invention est muni d'une ou plusieurs languettes permettant son arrachage facile, et il est soudé de façon étanche particulièrement fiable à travers la capsule, malgré les bavures de coupe du goulot. Le procédé de fermeture est simplifié et rendu plus reproductible, dans le cas des opercules portant au moins 3 languettes débordantes régulièrement espacées, par l'effet d'autocentrage dû à ces languettes lors de l'enfoncement de l'opercule dans la capsule.

## EXEMPLES

La figure 1 représente un emballage selon l'invention en position d'assemblage juste avant soudage, en demi-coupe axiale longitudinale passant par l'axe d'une languette débordante de l'opercule.

La figure 2 représente l'opercule de l'emballage, vu en plan.

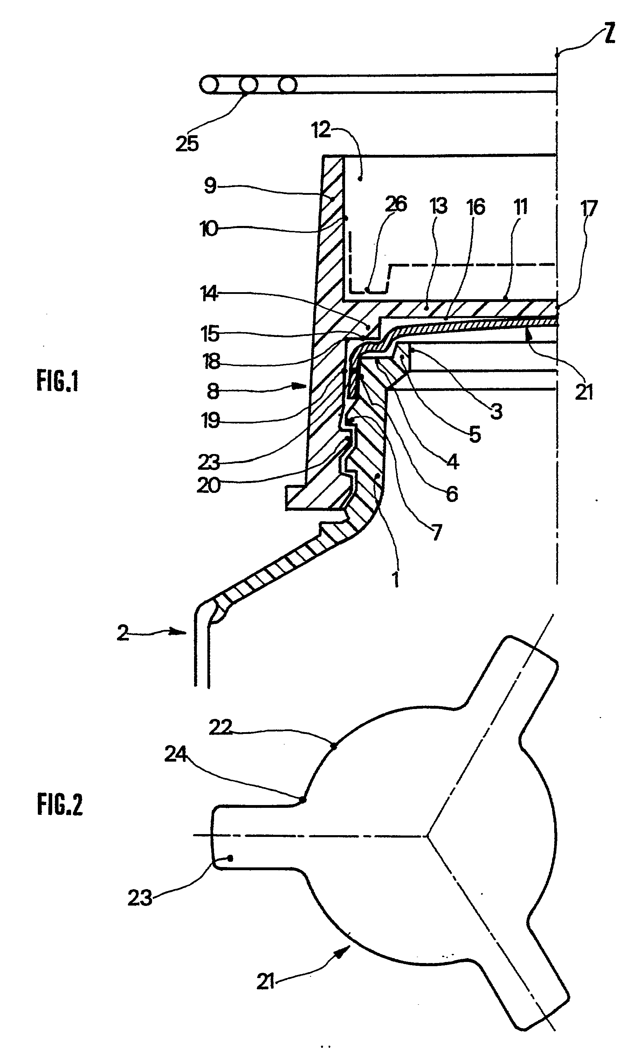

Sur la figure 1, on peut voir le goulot 1 en PE d'un tube 2, muni à son extrémité d'un orifice 3 de diamètre 8,13 mm. La surface d'extrémité 4 du goulot 1, perpendiculaire à l'axe longitudinal Z, est perturbé par une bavure 5 de pourtour légèrement ovalisé diamètre 9 à 9,5 mm et de hauteur 0,3 à 0,5 mm. Le haut 6 de la surface latérale du goulot est cylindrique circulaire et de diamètre 13,2 mm sur 4,5 mm à partir de son extrémité, avant le début du filetage 7 de fond de filet de diamètre 13,6 mm.

La capsule 8 en PP comporte à sa partie haute une jupe latérale 9 autour d'un creux central de pourtour 10 cylindrique circulaire de diamètre 14,3 mm et de profondeur 6 mm, le fond 11 de ce creux 12 étant plan et perpendiculaire à l'axe de l'emballage. Le fond intérieur 13 de la capsule 8 comprend sur son pourtour un épaulement périphérique 14 à surface de dessous 15 plane, de diamètre intérieur 10,5 mm et une partie centrale dont la surface de dessous 16 est en retrait de 1 mm par rapport à la surface 15 de l'épaulement 14. L'épaisseur du voile de fond 17 de la capsule est de 1 mm au niveau de la partie centrale 16, et de 2 mm au niveau de l'épaulement 14. La surface de dessous ou surface d'appui 15 de l'épaulement 14 a un pourtour 18 de diamètre 14 mm qui coincide avec le début d'une surface cylindrique circulaire 19 lisse de hauteur 6 mm précédant le filetage intérieur 20 de la capsule 8.

L'opercule 21, représenté en plan avant assemblage sur la figure 2, a un contour circulaire 22 de diamètre 13,5 mm avec 3 languettes débordantes radiales telles que 23 espacées à 120°, chacune de longueur 4,5 mm et de largeur 3 mm, le pied de ces languettes se raccordant au contour circulaire 22 par des portions 24 légèrement rayonnées au rayon de 0,5 mm. Les opercules des deux séries d'essais ci-après ont tous ce même contour.

Pour chaque assemblage, l'opercule 21 est disposé à plat sur l'extré mité ouverte de la capsule 8, centré à l'oeil, puis il est poussé avec une tige arrondie jusque vers le fond 16 de la capsule 8, et la capsule 8 est retournée et vissée sur le goulot 1 d'un tube 2 jusqu'au serrage à fond. La position de l'opercule 21 avec une de ses 3 languettes 23 repliée le long du haut 6 du goulot est représentée sur la figure 1, le serrage de l'opercule 21 étant réalisé entre le diamètre intérieur ⌀ 10,5 mm de l'épaulement 14 de la capsule 8 et le diamètre extérieur ⌀ 13,2 mm de l'extrémité 4 du goulot 1. La partie de l'opercule 21 intérieure à sa portion serrée reste bombée, elle chevauche la bavure 5 du goulot et est laissée libre par le fond 16 en retrait. On a vérifié avant et après soudage que les languettes 23 n'étaient abîmées, ni par le serrage, ni par le soudage qui les laisse décollées de la capsule et du goulot.

## 1ère série d'essais (soudage par induction)

Les opercules ont été découpés dans une bande à 5 couches d'épaisseur 0,31 mm, la nature de ces couches étant en allant de la face supérieure de l'opercule à sa face inférieure ou face de scellage, PE/copolymère adhésif/Al 40 μm/copolymère à base d'EAA/PE 70 μm. On en a plié un à la main sur un bord de table, le retour élastique est faible. On a effectué une vingtaine d'essais conformément au procédé de l'invention, et on a obtenu des soudages satisfaisants des opercules dans les conditions suivants:
- inducteur constitué par une spirale circulaire plate 25 de 3 spires (figure 1), de diamètre extérieur 30 mm et de pas 3 mm, perpendiculaire à l'axe Z et centrée sur cet axe, placée 2 à 3 mm au-dessus de la capsule 8, c'est-à-dire environ 10 mm au-dessus de l'opercule 21 serré sur le goulot 1 par l'épaulement périphérique 14; fréquences 350 à 450 kHz.

## 2ème série d'essais

On a utilisé des opercules identiques à ceux de la 1ère série d'essais.

Les essais portant sur une dizaine d'opercules ont été effectués avec une sonotrode à extrémité en Titane creux 26 appliquée sur la surface de fond 11 du creux 12 de la capsule 8, cette extrémité 26 ayant des diamètres intérieur et extérieur de 11 et 14 mm. Le diamètre extérieur 14 mm permet d'appliquer la sonotrode avec une position bien reproductible d'un assemblage à l'autre. Des soudures de bonne qualité ont été obtenues avec: 700 W - 40 kHz - 0,1 à 0,2 s de maintien en appuyant bien la sonotrode. La position de l'extrémité 26 de la sonotrode est représentée en trait discontinu sur la figure 1.

## 3ème série d'essais

Les opercules, de même géométrie que précédemment à l'exception de leur épaisseur, ont été découpés dans une bande à 3 couches d'épaisseur 0,215 mm; la nature de ces couches étant en allant de la face supérieure à la face inférieure ou face de scellage des opercules: polyester chargé avec 15% en masse de poudre d'oxyde de titane 120 μm/adhésif 15 μm/polyoléfine 80 μm.

Des soudures de bonne qualité ont été obtenues dans la même configuration que dans la série d'essais précédente, avec la même sonotrode et un réglage semblable: 700 W - 40 kHz - 0,2 s de maintien de la sonotrode.

## APPLICATIONS

L'emballage de l'invention et son procédé de fermeture sont utilisés pour le conditionnement de produits hygiéniques, phamaceutiques, cosmétologiques, alimentaires. La fiabilité de la fermeture du tube par l'opercule de garantie et la facilité d'arrachement de cet opercule sont des avantages importants.

## Revendications

1. Emballage comprenant un tube (2) à goulot fileté (1) en matière plastique, une capsule à vis (8) également en matière plastique et un opercule intermédiaire (21) du contour circulaire de diamètre égal ou voisin du diamètre extérieur de l'extrémité (4) dudit goulot (1), cet opercule (21) comportant plusieurs couches dont une couche barrière et pouvant être soudé sur l'extrémité (4) du goulot (1) après vissage de la capsule (8) sur ledit goulot (1), le fond de la capsule (8) comportant un épaulement périphérique (14) appuyant alors ledit opercule (21) sur ladite extrémité (4) du goulot (1) et ledit opercule (21) comportant au moins une languette (23) débordant alors de cette extrémité (4) pour l'arrachement de cet opercule (21) soudé, l'extérieur (6) dudit goulot (1) et l'intérieur (18) de ladite capsule (8) laissant entre eux un espace permettant de loger la ou lesdites languettes (23) en position rabattue, caractérisé en ce que:
— ledit opercule (21) a deux couches externes à base de matière plastique et il est déformable avec un retour élastique faible ou nul, la déformation angulaire résiduelle dudit opercule (21) plié après relâchement de la contrainte de pliage étant d'au moins la moitié de sa déformation en fin de pliage;
— l'épaulement périphérique d'appui (14) a un diamètre intérieur choisi entre les diamètres intérieur et extérieur du goulot (1) et la surface centrale (16) du fond de la capsule (8) est en retrait de façon à ne pas appuyer l'opercule (21) sur la bavure de coupe (5) de l'extrémité (4) du goulot (1), la partie centrale dudit opercule (21) venant alors en raison de sa nature chevaucher ladite bavure (S) sans risque de déchirure.

2. Emballage selon la revendication 1, dans lequel l'opercule (21) a 3 à 7 languettes espacées de mêmes géométries.

3. Emballage selon l'une quelconque des revendications 1 ou 2, la capsule (8) étant en polypropylène et le goulot (1) du tube (2) en polyéthylène, l'opercule (21) comportant les couches suivantes:
— une couche supérieure à base de polyester ou de polyéthylène, éventuellement mélangée d'adhésif;
— une couche barrière centrale en aluminium, d'épaisseur 10 à 60 µm;
— une couche inférieure en matière du groupe constitué par, copolymère ou mélange à base de EAA; EVA; copolymère propylène-éthylène; cette matière étant éventuellement mélangée d'adhésif; l'épaisseur de cet opercule (21) soudable par induction ou par ultrasons sur le goulot (1) après serrage de la capsule (8) étant de 0,12 à 0,40 mm.

4. Emballage selon la revendication 3, dont l'opercule (21) comporte en-dessous de ladite couche inférieure une couche inférieure supplémentaire à base de polyoléfine.

5. Emballage selon l'une quelconque des revendications 1 ou 2, la capsule (8) étant en polypropylène et le goulot (1) du tube (2) en polyéthylène, l'opercule (21) comportant les couches suivantes:
— une couche supérieure barrière en polyester additionné de 10 à 30% en masse de charges minérales, éventuellement mélangé d'adhésif;
— une couche centrale barrière en matière du groupe constitué par: copolymère à base d'alcool polyvinylique (EVOH), polyamide amorphe (PA), polyamide à noyau aromatique, chlorure de polyvinylidène (PVDC).
— une couche inférieure de scellage en PE ou en mélange PE/adhésif;
la capsule (8) comportant une surface extérieure (11) perpendiculaire à son axe permettant l'application d'une sonde à ultra-sons (26) au droit de la surface annulaire de serrage de l'opercule (21) et l'épaisseur dudit opercule (21) soudable par ultrasons sur le goulot (1) étant de 0,10 à 0,30 mm.

6. Emballage selon l'une quelconque des revendications I à 5, dans lequel la ou les languettes débordantes (23) ont une longueur comprise entre 2 et 6 mm, le goulot (1) et la capsule (8) en position serrée ayant des surfaces périphériques en regard (6 et 19) lisses sur une hauteur au moins égale à cette longueur à partir de l'extrémité (4) dudit goulot (1).

7. Procédé de fermeture d'un tube (2) à goulot (1) en matière plastique par une capsule (8) avec un opercule intermédiaire (21) découpé dans un stratifié comprenant au moins 2 couches externes à base de matière plastique et une couche barrière, utilisable pour la fermeture de l'emballage de l'une quelconque des revendications 1 à 6, ledit opercule (21) de contour circulaire (22) comportant au moins une portion débordante (23) permettant son arrachement après scellage, le ou lesdites portions débordantes (23) logeant entre l'extérieur du goulot (1) et l'intérieur de la capsule (8) fixée sur ledit goulot (1), l'opercule (21) étant scellé sur l'extrémité (4) dudit goulot (1), caractérisé en ce que:
a) on choisit un dit stratifié d'épaisseur comprise entre 0,10 et 0,40 mm déformable et à retour élastique faible ou nul, la déformation angulaire résiduelle dudit opercule (21) plié après relâchement de la contrainte de pliage étant d'au moins la moitié de sa déformation en fin de pliage;
b) le diamètre dudit contour circulaire (22) dudit opercule (21) est choisi entre le diamètre extérieur de l'extrémité (4) dudit goulot (1) et ce diamètre augmenté de 0,5 mm, et sa ou ses portions déformables (23) consistent en une languette radiale (23) ou plusieurs languettes radiales (23) régulièrement espacées;
c) on prépare un tube (2) ayant un goulot (1) et une capsule (8) filetés, cette capsule (8) étant en matière plastique et son fond (13) comportant un épaulement périphérique (14) d'appui sur l'extrémité (4) du goulot (1), ledit épaulement (14) ayant un diamètre intérieur compris entre les diamètres intérieur et extérieur du goulot (1) et un fond central en retrait (16) de façon à ne pas porter sur les bavures (5) de défaut de coupe de l'extrémité (4) du goulot (1) et donc à ne pas appuyer ledit opercule (21) sur une telle bavure (5), le haut (6) de la surface latérale du goulot (1) et l'intérieur de la capsule (8) en-dessous de sondit épaulement (14) laissant entre eux un espace permettant de loger le ou les languettes débordantes (23) dudit opercule (21);

d) on dispose l'opercule (21) au fond ou près du fond (13) de la capsule (8), sa portion circulaire y étant centrée et sa ou ses languettes débordantes (23) étant repliées vers la surface latérale intérieure (19 et 20) de ladite capsule (8);

e) on transporte la capsule (8) ainsi munie de l'opercule (21) jusqu'au goulot (1) du tube (2) et on la visse à fond sur ce goulot (1), la nature dudit opercule (21) et le fond en retrait (16) de ladite capsule (8) permettant alors à cet opercule (21) de chevaucher une bavure (5) de coupe du goulot (1) sans risque de crevaison;

f) on soude ensuite l'opercule (21) sur l'extrémité (4) du goulot (1) soit par induction, soit par ultra-sons, suivant la nature de l'opercule (21).

8. Procédé selon la revendication 7, dans lequel:
— dans l'étape (b), on découpe un opercule (21) comportant 3 à 7 languettes débordantes radiales (23) régulièrement espacées, de dimensions unitaires longueur 2 à 6 mm x largeur 2 à 5 mm;
— dans l'étape (d):
(d1) on dépose l'opercule (21) à plat sur l'extrémité ouverte de la capsule (8) retournée en le centrant par rapport à ladite extrémité;
(d2) on pousse l'opercule (21) par sa portion circulaire au fond ou près du fond (13) de la capsule (8), les languettes débordantes (23) se repliant et servant alors de moyens de centrage et d'accrochage de l'opercule (21) dans la capsule (8).

9. Procédé selon l'une quelconque des revendications 7 ou 8, dans lequel le gulot (1) est en polyéthylène et la capsule (8) en polypropylène, caractérisé en ce que l'opercule (21) est d'épaisseur comprise entre 0,12 et 0,40 mm et comporte les couches suivantes:
— une couche supérieure devant regarder le fond de la capsule, à base de lyester ou de polyéthylène, éventuellement mélangée d'adhésif;
— une couche barrière centrale en aluminium, d'épaisseur 10 à 60 µm;
— une couche inférieure, soudable sur le goulot (1) en polyéthylène et pelable, en matière du groupe constitué par, copolymère ou mélange à base de EAA; EVA; copolymère propylène-éthylène; cette matière étant éventuellement mélangée d'adhésif.

10. Procédé selon l'une quelconque des revendications 7 ou 8, dans lequel le goulot (1) est en polyéthylène et la capsule (8) en polypropylène, ladite capsule (8) comportant une surface extérieure (11) perpendiculaire à son axe (Z) permettant l'application d'une sonde à ultra-sons (26) ou sonotrode, caractérisé en ce que l'opercule (21) est d'épaisseur comprise entre 0,10 et 0,30 mm et comporte au moins les couches suivantes:
— une couche supérieure barrière, devant regarder le fond de la capsule, en polyester additionné de 10 à 30% en masse de matières minérales, éventuellement mélangé d'adhésif;
— une couche inférieure, soudable sur le goulot en polyéthylène et pelable, elle-même en polyoléfine ou en mélange polyoléfine/adhésif;
et en ce que on soude l'opercule (21) sur l'extrémité (4) du goulot (1) par ultra-sons, avec une sonde à ultra-sons ou sonotrode (26) appliquée sur ladite surface extérieure (11) de la capsule (8).

11. Procédé selon la revendication 9, dans lequel les masses minérales ajoutées au polyester de la couche supérieure de l'opercule (21) se présentent sous forme de poudre(s) de granulométrie(s) inférieure(s) à 50 µm et sont en l'une au moins des matières du groupe constitué par: le carbonate de calcium, la silice, le talc, le verre.

**Patentansprüche**

1. Verpackung mit einer Tube (2) mit Gewindehals (1) aus Kunststoff, einer Schraubkappe (8) ebenfalls aus Kunststoff und einem Zwischendeckel (21) des kreisförmigen Randes von dem Außendurchmesser des Endes (4) des Halses (1) gleichem oder nahekommendem Durchmesser, wobei der Deckel (21) mehrere Schichten aufweist, darunter eine Sperrschicht, und auf das Ende (4) des Halses (1) nach Aufschrauben der Kappe (8) auf den Hals aufschweißbar ist, der Boden der Kappe (8) eine Umfangsschulter (14) aufweist, die dann den Deckel (21) auf das Ende (4) des Halses (1) andrückt, und der Deckel (21) wenigstens eine dann von diesem Ende vorstehende Zunge (23) zum Abziehen des geschweißten Deckels (21) aufweist, wobei das Äußere (6) des Halses (1) und das Innere (18) der Kappe (8) zwischen sich einen Raum lassen, der die Aufnahme der Zunge oder Zungen (23) im abgebogenen Zustand ermöglicht,
dadurch gekennzeichnet, daß:
— der Deckel (21) zwei äußere Schichten auf Kunststoffbasis hat und mit einer geringen oder keiner Rückfederung verformbar ist, wobei die zurückbleibende Winkelverformung des abgebogenen Deckels (21) nach Nachlassen der Biegebeanspruchung wenigstens die Hälfte seiner Verformung am Ende des Biegens ist;
— die Andrückumfangsschulter (14) einen Durchmesser hat, der zwischen den Innen- und Außendurchmessern des Halses (1) gewählt ist, und die mittlere Oberfläche (16) des Bodens der Kappe (8) derart zurückspringt, um den Deckel (21) nicht auf den Schnittgrat (5) des Endes des Halses (1) zu drücken, wobei der mittlere Teil des Deckels (21) dann aufgrund seiner Art den Grat (5) ohne Rißgefahr überbrückt.

2. Verpackung nach dem Anspruch 1, bei der der Deckel (21) 3 bis 7 beabstandete Zungen gleicher Geometrien hat.

3. Verpackung nach irgendeinem der Ansprüche 1 oder 2, bei der die Kappe (8) aus Polypropylen und der Hals (1) der Tube (2) aus Polyethylen ist, wobei der Deckel (21) die folgenden Schichten aufweist:

– eine obere Schicht auf Polyester- oder Polyethylenbasis, ggf. mit Klebstoff gemischt;
– eine mittlere Sperrschicht aus Aluminium mit 10 bis 60 µm Dicke;
– eine untere Schicht aus einem Material der Gruppe, die gebildet wird von: Copolymer oder Mischung auf Basis von EAA; EVA; Propylen-Ethylen-Copolymer; welches Material ggf. mit Klebstoff gemischt ist;
wobei die Dicke dieses auf den Hals (1) durch Induktion oder durch Ultraschall schweißbaren Deckels (21) nach dem Festziehen der Kappe (8) 0,12 bis 0,40 mm ist.

4. Verpackung nach dem Anspruch 3, deren Deckel (21) unter der unteren Schicht eine zusätzliche untere Schicht auf Polyolefinbasis aufweist.

5. Verpackung nach irgendeinem der Ansprüche 1 oder 2, bei der die Kappe (8) aus Polypropylen und der Hals (1) der Tube (2) aus Polyethylen ist, wobei der Deckel (21) die folgenden Schichten aufweist:
– eine obere Sperrschicht aus Polyester, dem 10 bis 30 Gew.-% mineralische Füllstoffe zugesetzt sind, ggf. mit Klebstoff gemischt;
– eine mittlere Sperrschicht aus einem Material der Gruppe, die gebildet wird von: Copolymer auf Basis von Polyvinylalkohol (EVOH), amorphem Polyamid (PA), Polyamid mit aromatischem Kern, Polyvinylidenchlorid (PVDC);
– eine untere Versiegelungsschicht aus PE oder einem PE/Klebstoff-Gemisch;
wobei die Kappe (8) eine zu ihrer Achse senkrechte Außenoberfläche (11) aufweist, die den Einsatz einer Ultraschallsonde (26) an der Stelle der Ringfläche zum Klemmen des Deckels (21) ermöglicht, und die Dicke des durch Ultraschall auf den Hals (1) schweißbaren Deckels (21) 0,10 bis 0,30 mm ist.

6. Verpackung nach irgendeinem der Ansprüche 1 bis 5, bei der die vorstehende(n) Zunge(n) (23) eine Länge im Bereich von 2 bis 6 mm haben, wobei der Hals (1) und die Kappe (8) in festgezogener Stellung zugewandte Umfangsoberflächen (6 und 19) aufweisen, die auf eine Höhe glatt sind, die wenigstens gleich dieser Länge ab dem Ende (4) des Halses (1) ist.

7. Verfahren zum Schließen einer Tube (2) mit Hals (1) aus Kunststoff durch eine Kappe (8) mit einem Zwischendeckel (21), der aus einem Schichtstoff geschnitten ist, der wenigstens 2 Außenschichten auf Kunststoffbasis und eine Sperrschicht aufweist, das zum Schließen der Verpackung nach irgendeinem der Ansprüche 1 bis 6 anwendbar ist, wobei der Deckel (21) von kreisförmigem Umriß (22) wenigstens einen vorspringenden Teil (23) aufweist, der sein Abziehen nach einer Versiegelung ermöglicht, wobei der oder die vorstehenden Teile (23) zwischen dem Äußeren des Halses (1) und dem Inneren der auf dem Hals (1) befestigten Kappe (8) aufgenommen werden, wobei der Deckel (21) auf dem Ende (4) des Halses (1) versiegelt wird,
dadurch gekennzeichnet, daß:
a) man einen solchen Schichtstoff einer Dicke im Bereich von 0,10 bis 0,40 mm wählt, der verformbar und von geringer oder keiner Rückfederung ist, wobei die zurückbleibende Winkelverformung des abgebogenen Deckels (21) nach dem Nachlassen der Biegebeanspruchung wenigstens die Hälfte seiner Verformung am Ende des Biegens ist;
b) der Durchmesser des kreisförmigen Umrisses (22) des Deckels (21) zwischen dem äußeren Durchmesser des Endes (4) des Halses (1) und diesem um 0,5 mm erhöhten Durchmesser gewählt wird und sein oder seine verformbaren Teile (23) aus einer radialen Zunge (23) oder mehreren gleichmäßig beabstandeten radialen Zungen (23) bestehen;
c) man eine Tube (2) mit einem Hals (1) und einer Kappe (8) mit Gewinden herstellt, wobei diese Kappe (8) aus Kunststoff ist und ihr Boden (13) eine Umfangsschulter (14) zum Aufliegen auf dem Ende (4) des Halses (1) aufweist, diese Schulter (14) einen Innendurchmesser zwischen den Innen- und Außendurchmessern des Halses (1) und einen zurückspringenden mittleren Boden (16) derart hat, um nicht auf den Schnittfehlergraten (5) des Endes (4) des Halses (1) zu liegen und somit den Deckel (21) nicht gegen einen solchen Grat (5) zu drücken, wobei der obere Teil (6) der Seitenfläche des Halses (1) und das Innere der Kappe (8) unterhalb ihrer Schulter (14) zwischen sich einen Raum lassen, der die Aufnahme der vorspringenden Zunge(n) (23) des Deckels (21) ermöglicht;
d) man den Deckel (21) am Boden oder in der Nähe des Bodens (13) der Kappe (8) anordnet, wobei sein kreisförmiger Teil hier zentriert wird und seine vorspringende(n) Zunge(n) (23) zur inneren Seitenoberfläche (19 und 20) der Kappe (8) umgebogen werden;
e) man die so mit dem Deckel (21) bestückte Kappe (8) bis zum Hals (1) der Tube (2) transportiert und man sie zum Boden auf diesen Hals (1) schraubt, wobei die Art des Deckels (21) und der zurückspringende Boden (16) der Kappe (8) es dann dem Deckel (21) ermöglichen, einen Schnittgrat (5) des Halses (1) ohne Rißgefahr zu überbrücken;
f) man anschließend den Deckel (21) auf das Ende (4) des Halses (1) entweder durch Induktion oder durch Ultraschall gemäß der Art des Deckels (21) aufschweißt.

8. Verfahren nach dem Anspruch 7, bei dem:
– im Schritt (b) man einen Deckel (21) mit 3 bis 7 vorspringenden radialen, regelmäßig beabstandeten Zungen (23) mit einheitlichen Abmessungen von 2 bis 6 mm Länge x 2 bis 5 mm Breite ausschneidet;
– im Schritt (d):
(d1) man den Deckel (21) flach auf das offene Ende der umgekehrten Kappe (8) auflegt, wobei man ihn bezüglich dieses Endes zentriert;
(d2) man den Deckel (21) mit seinem kreisförmigen Teil zum Boden oder in die Nähe des Bodens (13) der Kappe (8) drückt, wobei sich die vorstehenden Zungen (23) umbiegen und dann als Mittel zum Zentrieren und Festlegen des Deckels (21) in der Kappe (8) dienen.

9. Verfahren nach irgendeinem der Ansprüche 7 oder 8, bei dem der Hals (1) aus Polyethylen und die Kappe (8) aus Polypropylen ist
dadurch gekennzeichnet,
daß der Deckel (21) von einer Dicke im Bereich von 0,12 bis 0,40 mm ist und die folgenden Schichten aufweist:
– eine obere, dem Boden der Kappe zuzuwendende Schicht auf Basis von Polyester oder Polyethylen, ggf. mit Klebstoff gemischt;
– eine mittlere Sperrschicht aus Aluminium mit 10 bis 60 µm Dicke;
– eine untere, auf den Hals (1) aus Polyethylen schweißbare und abschälbare Schicht aus einem Material der Gruppe, die gebildet wird von: Copolymer oder Mischung auf Basis von EAA; EVA; Propylen-Ethylen-Copolymer; welches Material ggf. mit Klebstoff gemischt ist.

10. Verfahren nach irgendeinem der Ansprüche 7 oder 8, bei dem der Hals (1) aus Polyethylen und die Kappe (8) aus Polypropylen ist, welche Kappe (8) eine zu ihrer Achse (Z) senkrechte Außenoberfläche (11) aufweist, die den Einsatz einer Ultraschallsonde (26) oder Sonotrode ermöglicht,
dadurch gekennzeichnet,
daß der Deckel (21) von einer Dicke im Bereich von 0,10 bis 0,30 mm ist und wenigstens die folgenden Schichten aufweist:
– eine obere Sperrschicht, die dem Boden der Kappe zuzuwenden ist, aus Polyester, dem 10 bis 30 Gew.-% mineralische Füllstoffe zugesetzt sind, ggf. mit Klebstoff gemischt;
– eine untere, auf den Hals aus Polyethylen schweißbare und abschälbare Schicht, die selbst aus Polyolefin oder einem Polyolefin/Klebstoff-Gemisch besteht;
und daß man den Deckel (21) auf das Ende (4) es Halses (1) durch Ultraschall mit einer Ultraschallsonde oder Sonotrode (26) aufschweißt, die auf der äußeren Oberfläche (11) der Kappe (8) angebracht wird.

11. Verfahren nach dem Anspruch 9, bei dem die dem Polyester der oberen Schicht des Deckels (21) zugesetzten mineralischen Stoffe in Form von Pulver(n) von Korngröße(n) unter 50 µm vorliegen und aus wenigstens einem der Materialien der Gruppe sind, die von: dem Calciumcarbonat, dem Siliziumdioxid, dem Talk, dem Glas gebildet wird.

## Claims

1. A pack comprising a tube (2) with a screwthreaded neck (1) of plastics material, a screw cap (8) also of plastics material, and an intermediate cover (21) of circular contour of a diameter equal to or close to the outside diameter of the end (4) of said neck (1), said cover (21) comprising a plurality of layers including a barrier layer and being capable of being welded on to the end (4) of the neck (1) after the cap (8) has been screwed on to said neck (1), the end of the cap (8) comprising a peripheral shoulder (14) which then presses the cover (21) on to said end (4) of the neck (1) and said cover (21) comprising at least one tab (23) which then projects from said end (4) for tearing off the welded cover (21), the outside (6) of said neck (1) and the inside (18) of said cap (8) leaving between them a space for accommodating the tab or tabs (23) in a folded-back position, characterised in that:
– said cover (21) comprises two external plastics material-based layers and it is deformable with a little or no springback effect, the residual angular deformation of said cover (21) when folded after release of the folding stress being at least half its deformation at the end of folding;
– the peripheral support shoulder (14) is of an inside diameter selected between the inside and outside diameters of the neck (1) and the central surface (16) of the end of the cap (8) is set back so as not to press the cover (21) against the cutting burr (5) on the end (4) of the neck (1), the central part of said cover (21), by virtue of its nature, then coming over said burr (5) without the risk of tearing.

2. A pack according to claim 1 wherein the cover (21) has 3 to 7 spaced tabs of the same geometries.

3. A pack according to either one of claims 1 and 2, the cap (8) being of polypropylene and the neck (1) of the tube (2) being of polyethylene, the cover (21) oomprising the following layers:
– an upper layer based on polyester or polyethylene, possibly mixed with adhesive;
– a central barrier layer of aluminium, of from 10 to 60 µm in thickness;
– a lower layer of material from the group formed by: copolymer or mixture based on EAA; EVA; propylene-ethylene copolymer; said material possibly being mixed with adhesive; the thickness of said cover (21) which is weldable by induction or ultrasound on to the neck (1) after the cap (8) has been tightened being from 0.12 to 0.40 mm.

4. A pack according to claim 3 whose cover (21) comprises beneath said lower layer an additional polyolefin-based lower layer.

5. A pack according to either one of claims 1 and 2, the cap (8) being of polypropylene and the neck (1) of the tube (2) being of polyethylene, the cover (21) comprising the following layers:
– an upper barrier layer of polyester with the addition of from 10 to 30% by weight of mineral fillers, possibly mixed with adhesive;
– a central barrier layer of a material from the group formed by: copolymer based on polyvinyl alcohol (EVOH), amorphous polyamide (PA), polyamide with an aromatic ring and polyvinylidene chloride (PVDC); and
– a lower sealing layer of PE or a PE/adhesive mixture; the cap (8) comprising an outside surface (11) perpendicular to its axis permitting the application of an ultrasonic probe (26) at a right angle to the annular gripping surface of the cover (21) and the thickness of said cover (21) which is weldable by ultrasound on to the neck (1) being of from 0.10 to 0.30 mm.

6. A pack according to any one of claims 1 to 5 wherein the projecting tab or tabs (23) are between 2 and 6 mm in length, the neck (1) and the cap (8) in the tightened position having facing smooth peripheral surfaces (6 and 19) over a height which is at least equal to said length from the end (4) of said neck (1).

7. A process for closing a tube (2) with a neck (1) of plastics material by means of a cap (8) with an intermediate cover (21) which is cut out fram a laminate material comprising at least two outside plastics material-based layers and a barrier layer, which can be used for closing the pack according to any one of claims 1 to 6, said cover (21) of circular contour (22) comprising at least one projecting portion (23) permitting it to be torn off after sealing, said projecting portion or portions (23) being accommodated between the outside of the neck (1) and the inside of the cap (8) which is fixed on said neck (1), the cover (21) being sealed on to the end (4) of said neck (1), characterised in that:

a) a said laminate material of a thickness of between 0.10 and 0.40 mm, which is deformable and with little or no springback effect is selected, the residual angular deformation of said cover (21) when folded after release of the folding stress being at least half its deformation at the end of folding;

b) the diameter of said circular contour (22) of said cover (21) is selected between the outside diameter of the end (4) of said neck (1) and said diameter plus 0.5 mm, and its deformable portion or portions (23) consist of a radial tab (23) or a plurality of regularly spaced radial tabs (23);

c) a tube (2) having a screwthreaded neck (1) and a screwthreaded cap (8) are prepared, said cap (8) being of plastics material and its end (13) comprising a peripheral shoulder (14) for bearing against the end (4) of the neck (1), said shoulder (14) being of an inside diameter between the inside and outside diameters of the neck (1) and having a central end portion (16) which is set back in such a way as not to bear against the burrs (5) produced by defective cutting on the end (4) of the neck (1) and therefore not pressing said cover (21) against such a burr (5), the top (6) of the side surface of the neck (1) and the interior of the cap (8) below its said shoulder (14) leaving between them a space for accommodating the projecting tab or tabs (23) of said cover (21);

d) the cover (21) is disposed at or near the end (13) of the cap (8), its circular portion being centered in relation thereto and its projecting tab or tabs (23) being bent back towards the inside side surface (19 and 20) of said cap (8);

e) the cap (8) which is thus fitted with the cover (21) is transported to the neck (1) of the tube (2) and it is screwed right down on to the neck (1), the nature of said cover (21) and the set-back end (16) of said cap (8) then permitting said cover (21) to fit over a cutting burr (5) on the neck (1) without the risk of puncturing; and

f) the cover (21) is then welded on to the end (4) of the neck (1) either by induction or by ultrasound depending on the nature of the cover (21).

8. A process according to claim 7 wherein:

– in step (b) a cover (21) is cut out, which comprises 3 to 7 regularly spaced radial projecting tabs (23) of unit dimensions of from 2 to 6 mm in length and from 2 to 5 mm in width;

– in step (d):

(d1) the cover (21) is disposed flat over the open end of the upturned cap (8), being centered with respect to said end;

(d2) the cover (21) is pushed by its circular portion to or near the end (13) of the cap (8), the projecting tabs (23) being folded back and then serving as means for centering and engaging the cover (21) in the cap (8).

9. A process according to either one of claims 7 and 8 wherein the neck (1) is of polyethylene and the cap (8) is of polypropylene, characterised in that the cover (21) is from 0.12 to 0.40 mm in thickness and comprises the following layers:

– an upper layer which is to face the end of the cap, based on polyester or polyethylene, possibly mixed with adhesive;

– a central barrier layer of aluminium, from 10 to 60 μm in thickness; and

– a lower layer which is weldable on to the polyethylene neck (1) and which is peelable, of a material from the group formed by: copolymer or mixture based on EAA; EVA; and propylene-ethylene copolymer; said material possibly being mixed with adhesive.

10. A process according to either one of claims 7 and 8 wherein the neck (1) is of polyethylene and the cap (8) is of polypropylene, said cap (8) comprising an outside surface (11) which is perpendicular to its axis (Z), permitting the application of an ultrasonic probe (26) or sonotrode, characterised in that the cover (21) is between 0.10 and 0.30 mm in thickness and comprises at least the following layers:

– an upper barrier layer which is to face the end of the cap, of polyester with the addition of fram 10 to 30% by weight of mineral materials, possibly mixed with adhesive; and

– a lower layer which is weldable on to the polyethylene neck and which is peelable, itself being of polyolefin or polyolefin/adhesive mixture;

and that the cover (21) is welded on to the end (4) of the neck (1) by ultrasound, with an ultrasonic probe or sonotrode (26) applied to said outside surface (11) of the cap (8).

11. A process according to claim 9 wherein the mineral materials added to the polyester of the upper layer of the cover (21) are in the form of powder(s) of grain size or sizes which is or are less than 50 μm, and are made from one at least of the materials of the group formed by: calcium carbonate, silica, talc and glass.

FIG.1

FIG.2